# EUROPÄISCHE PATENTSCHRIFT

(11) **EP 3 130 099 B1**
(45) Veröffentlichungstag und Bekanntmachung des Hinweises auf die Patenterteilung: **21.12.2022**
(21) Anmeldenummer: 15719973.8
(22) Anmeldetag: 09.04.2015
(51) Int. Cl.: H04L 1/18, H04L 1/08, H04L 1/22, H04L 1/00

(54) **VERFAHREN FÜR EIN REDUNDANTES ÜBERTRAGUNGSSYSTEM MIT PRP UND ENERGIEEINSPARUNG**
METHOD FOR A REDUNDANT TRANSMISSION SYSTEM WITH PRP AND ENERGY-SAVINGS
PROCÉDÉ POUR UN SYSTÈME DE TRANSMISSION REDONDANT AVEC PRP ET ÉCONOMIE D'ÉNERGIE

(30) Priorität: 09.04.2014 DE 102014206873
(43) Veröffentlichungstag der Anmeldung: 15.02.2017
(73) Patentinhaber: Hirschmann Automation and Control GmbH, 72654 Neckartenzlingen (DE)
(72) Erfinder: HEER, Tobias, 72636 Frickenhausen (DE)
(74) Vertreter: Greif, Thomas
(86) Internationale Anmeldenummer: PCT/EP2015/057787
(87) Internationale Veröffentlichungsnummer: WO 2015/155316

(56) Entgegenhaltungen:
- US-A1- 2006 256 768
- US-A1- 2013 114 397

## Beschreibung

Die Erfindung betrifft ein Verfahren zum Betreiben eines Übertragungssystems, das ein erstes Netzwerk und zumindest ein weiteres Netzwerk aufweist, wobei zwischen diesen zumindest zwei Netzwerken dadurch Daten ausgetauscht werden, dass Daten des ersten Netzwerkes Verdopplungsmitteln zugeführt werden, wobei die zugeführten Daten über zumindest zwei Übertragungsstrecken drahtlos mittels PRP zu Separiermitteln übertragen und von den Separiermitteln an das angeschlossene weitere Netzwerk weitergeleitet werden.

Bestehende Übertragungssysteme wurden in US2013/114397 am 2013-05-09 und in US2006/256768 am 2006-11-16 offenbart.

Solche bekannten Übertragungssysteme finden Anwendung in sicherheitskritischen Fällen bei verfahrenstechnischen Anlagen, stationären oder mobilen Arbeitseinrichtungen, beispielsweise bei Arbeitsfahrzeugen wie Krane oder dergleichen.

Es ist dabei wichtig, dass Daten zuverlässig von dem ersten Netzwerk zu dem zumindest weiteren Netzwerk übertragen werden. Eine solche sicherheitskritische Datenübertragung ist besonders dann wichtig, wenn die Daten über eine drahtlose Übertragungsstrecke übertragen werden. Hierzu hat es schon eine Verbesserung derart gegeben, dass nicht nur eine Übertragungsstrecke, sondern zumindest zwei, vorzugsweise genau zwei Übertragungsstrecken für diese Sicherheitsanwendung (auch Safety-Anwendung genannt) eingesetzt werden. Eine weitere Verbesserung dieser redundanten Datenübertragung hat dadurch stattgefunden, dass sie drahtlos, das heißt über Funk oder Licht, mittels des PRP (Parallel Redundancy Protocol), welches ein Layer-2-Redundanzverfahren ist, welches von höheren Schichten unabhängig ist und sich vor allen Dingen für Echtzeit-Ethernet-Mechanismen eignet, eingesetzt wird.

Unter Sicherheitsaspekten arbeitet ein solches Übertragungssystem zwar schon zufriedenstellend, weil Redundanz der beiden Übertragungsstrecken gegeben ist. So kann beispielsweise dann, wenn eine drahtlose Übertragungsstrecke gestört ist oder ausfällt, die zumindest zweite Übertragungsstrecke genutzt werden, um die Datenübertragung von dem ersten zu dem weiteren Netzwerk sicherzustellen.

Dabei ist jedoch nicht auszuschließen, dass trotz dieser Redundanz die Datenübertragung zwischen den beiden Netzwerken unter sicherheitskritischen Aspekten in unzulässiger Weise gestört wird.

Einerseits ist die zuvor beschriebene Übertragung von Daten über zwei oder mehr als zwei Übertragungsstrecken unter sicherheitskritischen Aspekten hinsichtlich der Redundanz der Datenübertragung zwar von Vorteil, jedoch verursacht diese parallele Datenübertragung über zumindest zwei Übertragungsstrecken einen erhöhten Energieverbrauch und führt außerdem zu einer höheren thermischen Beanspruchung der Komponenten des Übertragungssystems. Dies führt in nachteiliger Weise zu einer reduzierten Ausdauer der Stromversorgung, insbesondere von Batterien und Akkus, und kann auch die Lebenserwartung der Komponenten des Übertragungssystems deutlich reduzieren, wenn diese unter höheren Temperaturbedingungen betrieben werden.

Bei der Übertragung von Daten über Übertragungsstrecken mittels Funk, wie zum Beispiel WLAN, gestatten es die nach dem Standard 802.11 arbeitenden Geräte eine höhere Verlustrate auf der drahtlosen Übertragungsstrecke dadurch zu kompensieren, dass verloren gegangene Datenpakete auf der Layer-2-Ebene erneut versandt werden. Dabei ist es erforderlich, dass von dem Empfänger der Datenpakete der Empfang eines Datenpaketes erkannt und diese Information an den Sender des Datenpaketes zurückgemeldet wird. Das bedingt jedoch, dass der Versender eines Datenpaketes weiß, ob ein Datenpaket erfolgreich bei dem Empfänger angekommen ist, nachdem es über die Übertragungsstrecke geschickt wurde. Bei dieser Art der Übertragung von Daten bleiben jedoch Redundanzerfordernisse außer Betracht, da nur eine Übertragungsstrecke vorhanden ist.

Der Erfindung liegt daher die Aufgabe zugrunde, ein Verfahren zum Betreiben eines Übertragungssystems hinsichtlich des Energieverbrauches zu verbessern unter gleichzeitiger Beibehaltung der Redundanzeigenschaften unter sicherheitskritischen Aspekten.

Diese Aufgabe ist durch die Merkmale des Patentanspruches 1 gelöst.

Erfindungsgemäß ist vorgesehen, dass die Daten als Datenpakete über die erste Datenstrecke übertragen werden und dann, wenn ein Datenpaket nicht übertragen wurde, dieses Datenpaket noch einmal zumindest über die zweite Übertragungsstrecke übertragen wird. Dies hat den Vorteil, dass Datenpakete über die erste Datenstrecke nacheinander übertragen werden, wobei jedes Mal dann, wenn ein Datenpaket erfolgreich über die Übertragungsstrecke übertragen wurde, dies von dem Empfänger (Separiermittel) quittiert und an den Sender (Verdopplungsmittel) zurückgemeldet wurde. Das bedeutet für den Sender, dass ein erneuter Versand eins Datenpaketes über die erste Datenstrecke nicht mehr erforderlich ist. Erst dann, wenn ein Datenpaket versandt wurde, aber aus welchen Gründen auch immer nicht beim Empfänger angekommen ist (zum Beispiel aufgrund einer gestörten Übertragungsstrecke), wird dies dem Sender von dem Empfänger mitgeteilt, der daraufhin dieses Datenpaket noch einmal zumindest über die zweite Übertragungsstrecke, also nicht auf der Übertragungsstrecke, auf der die erste Übertragung hätte stattfinden sollen, überträgt. Dass ein auf die Übertragungsstrecke geschicktes Datenpaket nicht beim Empfänger angekommen ist, kann dieser zum Beispiel nach einem gewissen Zeitablauf feststellen und danach dem Sender mitteilen, dass ein Datenpaket ausgeblieben ist, damit dieser es über die zumindest zweite Übertragungsstrecke noch einmal überträgt. Wird dann diese nochmalige Übertragung des Datenpaketes über die zweite Übertragungsstrecke von dem Empfänger festgestellt, erfolgt die Rückmeldung an den Sender, dass dieses nochmals ausgesendete Datenpaket erfolgreich angekommen ist und eine nochmalige Übertragung dieses Datenpaketes unterbleiben kann. Erfolgt hingegen eine nochmalige Übertragung und bleibt auch der Empfang dieses nochmals versendeten Datenpaketes aus, kann auch dies von dem Empfänger an den Sender rückgemeldet werden, damit dieser das Datenpaket, was jetzt schon zweimal nicht erfolgreich übertragen wurde, erneut über die zweite Übertragungsstrecke aussendet. Dieser Vorgang kann so lange wiederholt werden, bis ein Datenpaket erfolgreich von Sender an den Empfänger übertragen worden ist.

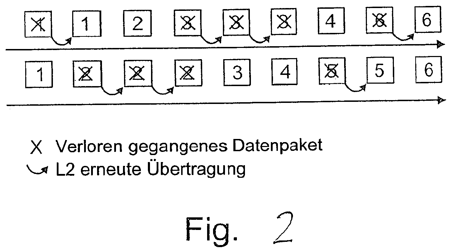

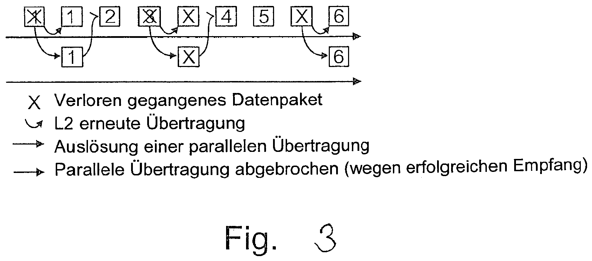

Ergänzend dazu ist in Weiterbildung der Erfindung vorgesehen, dass dann, wenn ein Datenpaket nicht übertragen wurde, dieses Datenpaket noch einmal nicht nur über die zweite Übertragungsstrecke, sondern über die zumindest zwei Übertragungsstrecken, vorzugsweise über genau zwei Übertragungsstrecken, übertragen wird. Diese Art und Weise der Übertragung der Datenpakete ist zum einen hinsichtlich der Redundanz, andererseits aber auch hinsichtlich der Energieeinsparung vor besonderer Bedeutung, da ein Datenpaket auf jeden Fall zuverlässig vom Sender an den Empfänger übertragen werden kann, gleichzeitig jedoch die Anzahl der zu übertragenden Datenpakete reduziert wird. An dieser Stelle wird schon auf die Figuren 2 und 3 verwiesen, die den Unterschied hinsichtlich der Anzahl der übertragenen Datenpakete zwischen dem Stand der Technik und der erfindungsgemäßen Datenübertragung verdeutlicht.

In Weiterbildung der Erfindung erfolgt die nochmalige Übertragung eines Datenpaketes mehr als zweimal. Dadurch ist sichergestellt, dass ein Datenpaket so lange übertragen wird, bis das vom Sender ausgesendete Datenpaket auch erfolgreich beim Empfänger angekommen ist. Hinsichtlich der Energieeinsparung kann die Anzahl der nochmaligen Übertragung begrenzt werden. Das heißt, in einer Weiterbildung der Erfindung wird die nochmalige Übertragung eines Datenpaketes unterbunden, wenn die Übertragung dieses Datenpaketes fehlerfrei erfolgt ist. Unter dem Aspekt des Energieverbrauches wird die Anzahl der nochmaligen Übertragung eines Datenpaketes bei 2, 3 oder 4 gesehen. Besonders vorteilhaft ist der dreimalige Versucht der Übertragung eines Datenpaketes, da dies einen vorteilhaften Kompromiss darstellt hinsichtlich einerseits des Energieverbrauches und andererseits hinsichtlich der Zuverlässigkeit bzw. Redundanz und auch hinsichtlich der Performance der Datenübertragung.

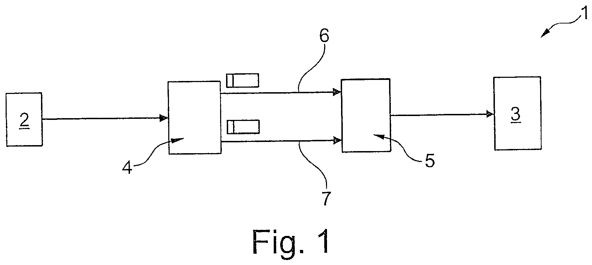

Das vorgestellte Verfahren kann auf einem Übertragungssystem, das in der Figur 1 dargestellt ist, durchgeführt werden.

Figur 1 zeigt eine prinzipielle Anordnung eines Übertragungssystems, welches zwei Netzwerke 2, 3 aufweist, die untereinander Daten austauschen sollen. Dieser Datenaustausch kann entweder unidirektional von dem Netzwerk 2 zu dem Netzwerk 3 (oder umgekehrt), genauso aber auch bidirektional zwischen den beiden Netzwerken 2, 3 erfolgen.

Bei den Netzwerken 2, 3 kann es sich um einfache oder komplexe Netzwerke, zum Beispiel in einer Ring- oder Linientopologie oder dergleichen, handeln. Es ist aber auch denkbar, dass ein solches Netzwerk 2, 3 nur ein einziges Element wie zum Beispiel einen Sensor, einen Aktor, ein Steuergerät oder dergleichen umfasst.

Um die Daten des Netzwerkes 2 zum Beispiel zu dem Netzwerk 3 zu Übertragen, sind Verdopplungsmittel 4 vorhanden. Diese Verdopplungsmittel 4 teilen den zugeführten Datenstrom in zwei Datenströme auf. Ebenso erfolgt das Zusammenführen der beiden Datenströme nach deren Empfangen über Separiermittel 5, wobei die empfangenen Datenströme nach dem Zusammenführen an das Netzwerk 3 weitergeleitet werden.

Die Übertragung der Daten zwischen den Verdopplungsmittel und den Separiermittein 5 erfolgt über zwei gleichartige oder voneinander unterschiedliche Übertragungsstrecken 6, 7 drahtlos mittels PRP. Die Drahtlosübertragung erfolgt in vorteilhafter Weise über Funkt, wobei eine optische Übertragung auch denkbar ist. Auch denkbar ist, dass die eine Übertragungsstrecke 6 eine Funkübertragungsstrecke und die zweite Übertragungsstrecke 7 eine optische Datenübertragungsstrecke ist. Sind beide Übertragungsstrecken 6, 7 zum Beispiel Funkübertragungsstrecken, können die Daten, genauer die Datenpakete, über diese beiden Funkübertragungsstrecken zum Beispiel auf gleicher Frequenz oder unterschiedlichen Frequenzen und ansonsten gleicher Parameter oder voneinander unterschiedlicher Übertragungsparameter übertragen werden. Gleichartige Übertragungsstrecken 6, 7 sind hinsichtlich ihres Aufbaues zu bevorzugen, wobei voneinander unterschiedliche Übertragungsstrecken 6, 7 (zum Beispiel optisch/Funk bzw. voneinander unterschiedliche Übertragungsparameter) hinsichtlich der Steigerung der Redundanz zu bevorzugen sind.

Nachdem die Daten von dem Erstnetzwerk 2 den Verdopplungsmitteln 4 (bei PRP auch als Redundancy Box bezeichnet) zugeführt worden sind, wird dort veranlasst, dass jedes Datenpaket mehrfach über die gleiche Übertragungsstrecke 6, 7 übertragen wird und/oder jedem Datenpaket ein Fehlerkorrekturwert zugeordnet wird. Anschließend erfolgt in entsprechender Weise die Übertragung der Datenpakete über die Übertragungsstrecken 6, 7, wobei die von den Separiermitteln 5 (im Falle von PRP auch als Redundancy Box bezeichnet) entsprechend ausgewertet, gegebenenfalls aufbereitet und als Datenpakete dem weiteren Netzwerk 3 zugeführt werden.

Die vorstehende Beschreibung der Figur 1 bezieht sich auf eine unidirektionale Datenübertragung von dem Erstnetzwerk 2 zu dem weiteren, insbesondere dem zweiten Netzwerk 3. Hierzu sind die Verdopplungsmittel 4 zum Aufteilen des Datenstromes und die Separiermittel 5 zum Zusammenführen des empfangenen Datenstromes ausgebildet.

Ist auch eine Datenübertragung von dem Netzwerk 3 zu dem Netzwerk 2 gewünscht, können weitere Verdopplungsmittel 4 bzw. Separiermittel 5 in dem Übertragungsweg zwischen dem Netzwerk 3 und dem Netzwerk 2 vorhanden sein, sodass sich ein doppelter Aufbau ergibt. Alternativ dazu können die Mittel 4, 5 auch dazu ausgebildet sein, nicht nur den zugeführten Datenstrom zu verdoppeln, sondern auch die über die Übertragungsstrecken 6, 7 zugeführten Datenströme zu separieren, was ebenso für die Separiermitte 5 gilt.

Figur 2 zeigt die Art und Weise der Übertragung von Datenpaketen mit Geräten, die mittels WLAN, also nach dem 802.11-Standard, arbeiten. Diese Geräte, die den 802.11-Standard benutzen, sind dazu geeignet und ausgebildet, Datenpakete auf der Layer-2-Ebene erneut zu versenden, um Verluste von Datenpaketen auszugleichen.

Die Art und Weise der erneuten Übertragung von verloren gegangenen Datenpaketen bezüglich der Layer-2-Ebene ist in Figur 2 dargestellt. Hier ist dargestellt, dass dann, wenn ein Datenpaket nicht übertragen wurde, dieses Datenpaket noch einmal über die zumindest zwei Übertragungsstrecken (obere und untere Übertragungsstrecke in Figur 2) übertragen wird.

Dabei wird davon ausgegangen, dass das erste Datenpaket "1" über die obere Übertragungsstrecke ausgesandt wurde, jedoch verloren gegangen ist, weshalb es mit X gekennzeichnet ist. Dies veranlasst den Sender, dieses Datenpaket "1" erneut über die obere Übertragungsstrecke zu versenden. Gleichzeitig wird es auch noch einmal über die weitere Übertragungsstrecke (untere Übertragungsstrecke) versandt. Da das obere Datenpaket "1" zuerst beim nicht dargestellten Empfänger angekommen ist, kann das Datenpaket "1" auf der unteren Übertragungsstrecke vom Empfänger verworfen werden. Das Datenpaket "2" wird auf der oberen Übertragungsstrecke ausgesandt und kommt erfolgreich beim Empfänger an, wobei dies vom Empfänger an den Sender rückgemeldet wird und eine nochmalige Aussendung des Datenpaketes "2" auf der oberen Übertragungsstrecke unterbleiben kann. Da es jedoch eine gewisse Zeit erfordert, bis das Datenpaket "2" beim Empfänger angekommen und dieser Empfang von ihm quittiert wurde, hatte der Sender schon die Veranlassung, das Datenpaket "2" auch auf der unteren Übertragungsstrecke zu übertragen. Da es inzwischen über die obere Übertragungsstrecke erfolgreich angekommen ist, konnten die erneut ausgesendeten Datenpakete "2" auf der unteren Übertragungsstrecke verworfen werden. Nachdem Datenpaket "2" erfolgte auf der oberen Übertragungsstrecke die Aussendung eines Datenpaketes "3", weiches verloren ging und erneut auf der oberen Übertragungsstrecke ausgesendet wurde. Da es erneut verloren ging (also insgesamt dreimal lag keine erfolgreiche Datenübertragung vor) wurde die Übertragung des Datenpaketes "3" auf der unteren Übertragungsstrecke veranlasst. Dieses ist dann erfolgreich beim Empfänger angekommen, was von diesem quittiert wurde, sodass eine erneute Aussendung des Datenpaketes "3" unterblieb. Danach erfolgte die Aussendung des Datenpaketes "4" auf der oberen Übertragungsstrecke. Da auch hier eine gewisse Zeit erforderlich war, bis es vom Empfänger empfangen und der erfolgreiche Empfang quittiert wurde, wurde es nochmals über die untere Übertragungsstrecke erneut übertragen, wobei diese erneute Übertragung jedoch verworfen werde kann.

Diese zuvor beschriebene Art und Weise der Datenübertragung kann sich für folgende Datenpakete jeweils in Abhängig davon, ob ein Datenpaket erfolgreich übertragen wurde oder nicht, wiederholen.

Da immer eine gewisse Zeit erforderlich ist, um ein vom Sender ausgesendetes Datenpaket über die Übertragungsstrecke zum Empfänger zu Übertragen und auch eine gewisse Zeit erforderlich ist, die der Empfänger benötigt, um den erfolgreichen Empfang an den Sender zurück zu quittieren, kann auch daran gedacht werden, dass ein Datenpaket zunächst über die zweite Übertragungsstrecke übertragen wird. Dies ist in dem Beispielfall gemäß Figur 2 bei dem Datenpaket "5" der Fall. Da hier das zuerst ausgesendete Datenpaket "5" verloren gegangen ist, wird es erneut auf dieser Übertragungsstrecke ausgesandt. Alternativ ist es denkbar, dass es nach dem ersten Versand auf der unteren Übertragungsstrecke auch auf der oberen Übertragungsstrecke erneut ausgesendet wird. Bei dem in Figur 2 gezeigten Fall kommt das auf der unteren Übertragungsstrecke erneut versandte Datenpaket "5" erfolgreich beim Empfänger an, sodass eine erneute Aussendung unterbleibt. Auch bei einem weiteren Datenpaket "6", welches auf die obere Übertragungsstrecke geschickt wurde, geht das zuerst ausgesendete Datenpaket "6" verloren, sodass auf gleiche Art und Weise vorgegangen werden kann, wie es vorstehend zu dem Datenpaket "1" beschrieben worden ist. Aufgrund der in Figur 2 verschiedenen gezeigten Möglichkeiten können also auf der einen und/oder anderen Übertragungsstrecke verloren gegangene Datenpakete erfolgreich zwischen dem Sender und dem Empfänger (also dem Verdopplungsmittel 4 und dem Separiermittel 5 gemäß Figur 1) übertragen werden.

Unter Aspekten eines reduzierten Energieverbrauches ist die Art und Weise der Datenübertragung gemäß Figur 3 von besonderem Interesse und besonderem Vorteil.

Bei dieser Methode werden wiederum die Daten als Datenpakete zunächst über die erste (obere) Datenstrecke übertragen. Da das erste Datenpaket "1" nicht erfolgreich vom Sender und Empfänger werden konnte, wird dieses Datenpakt noch einmal zumindest über die zweite (untere) Übertragungsstrecke, optional aber auch über die obere Übertragungsstrecke nochmals übertragen. Wurde vom Empfänger erkannt, dass das Datenpaket "1", welches entweder über die obere Übertragungsstrecke oder, vorzugsweise, über die untere Übertragungsstrecke erfolgreich übertragen wurde, wird dies an den Sender rückgemeldet. Dies bewirkt, dass er ein weiteres Datenpaket "2" auf die obere Übertragungsstrecke schickt. Dieses Datenpaket "2" wird erfolgreich übertragen, sodass danach die Übertragung des nächsten Datenpaketes "3" gestartet werden kann. Da dieses Datenpaket "2" auf der ersten Übertragungsstrecke verloren geht, kann es erneut auf der oberen Übertragungsstrecke und/oder deren unteren Übertragungsstrecke übertragen werden. In dem Beispielfall gemäß Figur 3 geht das Datenpaket "3" auf der oberen Übertragungsstrecke verloren, wird jedoch auf der unteren Übertragungsstrecke erfolgreich übertragen. Nachdem dies vom Empfänger festgestellt und an den Sender rückgemeldet wurde, wird von diesem die Aussendung des nächsten Datenpaketes "4" veranlasst. Dieses wird erfolgreich über die erste Datenstrecke übertragen, sodass eine nochmalige Übertragung, egal auf welcher Übertragungsstrecke, unterbleiben kann. Gleiches gilt auch für das folgende Datenpaket "5". Bei dem folgenden Datenpaket "6" setzt die gleiche Vorgehensweise ein, wie sie bezüglich des Datenpaketes "1" in Figur 3 dargestellt und beschrieben ist.

Wie mit einem Blick auf Figur 3 erkennbar ist, ist die Anzahl der übertragenen Datenpakete, insbesondere auf der unteren Übertragungsstrecke, deutlich reduziert, sodass dadurch auch ein deutlich reduzierter Energieverbrauch und eine Absenkung der Betriebstemperatur erzielt wird. Gleichzeitig ist aber auch erkennbar, dass alle Datenpakete "1" bis "6" zuverlässig von dem Sender (erstes Netzwerk 2) zu dem Empfänger (zweites Netzwerk 3) übertragen worden sind. Durch diese Vorgehensweise werden also Reduzierung des Energieverbrauches, Reduzierung der Betriebstemperatur und redundante Datenübertragung unter sicherheitskritischen Aspekten in besonders vorteilhafter Weise in Einklang gebracht.

### Bezugszeichenliste

- 1.: Übertragungssystem
- 2.: Erstes Netzwerk
- 3.: Weiteres Netzwerk
- 4.: Verdopplungsmittel
- 5.: Separiermittel
- 6.: Erste Übertragungsstrecke
- 7.: Zweite Übertragungsstrecke

## Patentansprüche

1. Verfahren zum Betreiben eines Übertragungssystems (1), das ein erstes Netzwerk (2) und zumindest ein weiteres Netzwerk (3) aufweist, wobei zwischen diesen zumindest zwei Netzwerken (2, 3) dadurch Daten ausgetauscht werden, dass Daten des ersten Netzwerkes (2) Verdopplungsmitteln (4) zugeführt werden, wobei die zugeführten Daten durch die Verdopplungsmittel (4) in zwei Datenströme aufgeteilt werden und über mindestens eine erste von zumindest zwei Übertragungsstrecken (6, 7) drahtlos mittels Parallel Redundancy Protocol, PRP, zu Separiermitteln (5) übertragen und von den Separiermitteln (5) an das angeschlossene weitere Netzwerk (3) weitergeleitet werden, wobei die Daten als Datenpakete über die erste Übertragungsstrecke (6) übertragen werden und dann, wenn ein Datenpaket nicht vom Separiermittel (5) empfangen wurde, dieses Datenpaket noch einmal zumindest über die zweite Übertragungsstrecke (7) und nicht über die erste Übertragungsstrecke (6) übertragen wird.

2. Verfahren nach Anspruch 1, wobei wenn ein Datenpaket nicht übertragen wurde, dieses Datenpaket noch einmal über die zumindest zwei Übertragungsstrecken (6, 7) übertragen wird.

3. Verfahren nach Anspruch 1 oder 2, wobei die nochmalige Übertragung eines Datenpaketes mehr als zwei Mal erfolgt.

4. Verfahren nach Anspruch 1, 2 oder 3, wobei die nochmalige Übertagung eines Datenpaketes unterbunden wird, wenn die Übertragung dieses Datenpaketes fehlerfrei erfolgt ist.

## Claims

1. Method for operating a transmission system (1) that comprises a first network (2) and at least one further network (3), wherein data are interchanged between these at least two networks (2, 3) by virtue of data of the first network (2) being supplied to duplicating means (4), wherein the supplied data are split into two data streams by the duplicating means (4) and are wirelessly transmitted to separating means (5) via at least a first of at least two transmission links (6, 7) by means of the parallel redundancy protocol, PRP, and forwarded to the connected further network (3) by the separating means (5), wherein the data are transmitted as data packets via the first transmission link (6) and if a data packet was not received by the separating means (5), this data packet is transmitted once again at least via the second transmission link (7) and not via the first transmission link (6).

2. Method according to Claim 1, wherein, if a data packet was not transmitted, this data packet is transmitted once again via the at least two transmission links (6, 7).

3. Method according to Claim 1 or 2, wherein the repeat transmission of a data packet is performed more than two times.

4. Method according to Claim 1, 2 or 3, wherein the repeat transmission of a data packet is stopped if the transmission of this data packet is performed error-free.

## Revendications

1. Procédé de fonctionnement d'un système de transmission (1) qui comporte un premier réseau (2) et au moins un autre réseau (3), des données étant échangées entre ces au moins deux réseaux (2, 3) en ce que les données du premier réseau (2) sont amenées à des moyens de doublement (4), les données amenées étant divisées en deux flux de données par les moyens de doublement (4) et transmises sans fil à des moyens de séparation (5) par le biais d'au moins une première d'au moins deux liaisons de transmission (6, 7) à l'aide du protocole de redondance parallèle, PRP, et étant transférées à l'autre réseau raccordé (3) par les moyens de séparation (5), les données étant transmises sous forme de paquets de données par le biais de la première liaison de transmission (6) puis, si un paquet de données n'a pas été reçu par le moyen de séparation (5), ce paquet de données étant à nouveau transmis au moins par le biais de la deuxième liaison de transmission (7) et non par le biais de la première liaison de transmission (6).

2. Procédé selon la revendication 1, dans lequel si un paquet de données n'a pas été transmis, ce paquet de données est à nouveau transmis par le biais des au moins deux liaisons de transmission (6, 7).

3. Procédé selon la revendication 1 ou 2, un paquet de données étant retransmis plus de deux fois.

4. Procédé selon la revendication 1, 2 ou 3, la transmission répétée d'un paquet de données étant empêchée si la transmission de ce paquet de données a été effectuée sans erreur.
